# EUROPEAN PATENT APPLICATION

(11) **EP 2 833 114 A1**
(43) Date of publication of application: **04.02.2015**
(21) Application number: 13767658.1
(22) Date of filing: 21.03.2013
(51) Int. Cl.: G01M 13/04

(54) **METHOD AND SYSTEM FOR INSPECTING ROTATING MACHINE COMPONENT**

(30) Priority: 28.03.2012 JP 2012072864; 14.06.2012 JP 2012134532
(71) Applicant: NTN Corporation, Osaka-shi, Osaka 550-0003 (JP)
(72) Inventor: TAKADA, Seiichi, Kuwana-shi Mie 511-8678 (JP); ITOMI, Shoji, Kuwana-shi Mie 511-8678 (JP)
(74) Representative: Behrmann, Niels
(86) International application number: PCT/JP2013/057981
(87) International publication number: WO 2013/146501

(57) **Abstract**

A portable-terminal-using inspection method for a rotating machine component is provided which allows an operating state of a rotating machine component (1) such as a bearing to be easily inspected by using a popularized portable information terminal (2) and a dedicated sensor (3) that supplies detection information to the terminal (2). The state of the rotating machine component (1) is detected by the sensor (3). Detection data regarding the detected state is supplied from the sensor (3) to the terminal (2). Data processing is performed on the detection data in the terminal (2) or a server (6) connected to the terminal (2) via a communication line (7), by using data processing software (4) and specification data (5) for the model number associated with the component (1), and a result of the data processing is displayed on a screen (2a) of the terminal (2).

## Description

### CROSS REFERENCE TO THE RELATED APPLICATION

This application is based on and claims Convention priority to Japanese patent application No. 2012-072864, filed March 28, 2012, and Japanese patent application No. 2012-134532, filed June 14, 2012, the entire disclosures of which are herein incorporated by reference as a part of this application.

### BACKGROUND OF THE INVENTION

### (Field of the Invention)

The present invention relates to a portable-terminal-using inspection method (an inspection method with using a portable terminal) and system, for a rotating machine component which is a machine component including a rolling element such as a rolling bearing, a constant velocity ball joint, or the like, for inspecting an operating state of the rotating machine component by using a popularized portable information terminal (mobile information terminal) such as a smartphone or the like; and a server thereof.

### (Description of Related Art)

As a method for inspecting a rotating machine component such as a bearing or the like, there is a method in which vibration or the temperature of the rotating machine component such as a bearing or the like is measured and a state thereof is displayed or inspected (e.g., Patent Documents 1, 2).

### [Prior Art Document]

### [Patent Document]

[Patent Document 1] JP Examined Utility Model Publication No. 5-17625
[Patent Document 2] JP Patent No. 2954183

### SUMMARY OF THE INVENTION

However, the conventional inspection method disclosed in Patent Document 1 or Patent Document 2 requires a display device or a processing device dedicated for inspection, the devices are large in size and expensive, and thus there is the problem that it is generally difficult to use the method.

An object of the present invention is to provide a portable-terminal-using inspection method and system, for a rotating machine component such as a bearing or the like, which allow an operating state of the rotating machine component to be easily inspected by using a popularized portable information terminal (mobile information terminal) and a dedicated sensor that supplies detection data to the portable information terminal; and a server thereof.

Hereinafter, for convenience of easy understanding, a description will be given with reference to the reference numerals in embodiments.

A portable-terminal-using inspection method for a rotating machine component according to one aspect of the present invention is directed to a method for inspecting a rotating machine component 1 by using a general-purpose portable information terminal 2. The method includes the steps of: detecting a state of the rotating machine component 1 by a dedicated sensor 3; supplying detection data regarding the detected state from the dedicated sensor 3 to the portable information terminal 2; in the portable information terminal 2 or in a server 6 connected to the portable information terminal 2 via a communication network 7, performing data processing on the detection data by using data processing software 4 or 4A and specification data 5 for a model number associated with the rotating machine component; and displaying a result of the data processing on a screen 21a of the portable information terminal 2.

In the present specification, the "rotating machine component" refers to a machine component including a rolling element such as a rolling bearing, a constant velocity ball joint, or the like. The general-purpose portable information terminal 2 may include a smartphone, a tablet, or the like. The terminal 2 may be an information processing device that does not necessarily have a telephone function but is connectable to the server 6 via a wide-area communication line network 7 such as a telephone network, the Internet, or the like. The terminal 2 has an OS (operation program) 9 that is able to download and install an application program. The dedicated sensor 3 is, for example, a pickup for detecting vibration or a sensor for detecting a temperature. The sensor 3 may be connected to the portable information terminal via a cable 8 having a terminal 8a that complies with the standard of a micro USB (one of the USB standards which are connection interface standards) or the like, a wireless LAN, or the like. Alternatively, the dedicated sensor 3 may be able to input data to the portable information terminal 2 via an attachable/detachable storage medium such as a memory chip, a USB memory, or the like. The data processing software 4 may be an application program to be executed on the OS 9 of the portable information terminal 2. In the case that the rotating machine component 1 is a bearing, the model number associated with the rotating machine component 1 is the number for the rotating machine component determined for each specification, which is referred to a bearing name or a bearing number (a bearing designation). Alternatively, the model number may be the number determined for each rotating machine component. In the case that the rotating machine component 1 is a rolling bearing, the specification data 5 includes, for example, the number of balls, the ball diameter, the dimensions of an inner ring and an outer ring, and the like.

According to this configuration, the general-purpose portable information terminal 2 is used as a unit configured to load the detection data of the dedicated sensor and a unit configured to process the detection data or send the detection data to the server to cause the server to process the detection data, and is used as a unit configured to display a result of the processing. Thus, by merely preparing the dedicated sensor 3 and further using the popularized portable information terminal 2 such as a smartphone, a tablet, or the like as for the rest, it is possible to easily inspect an operating state of the rotating machine component 1. For the data processing with the data processing software 4, in addition to the specification data 5 and the detection data supplied from the dedicated sensor 3, data of a rotational speed or the like of the rotating machine component 1, such as a bearing, which is inputted from a manual input unit 22 of the portable information terminal 2 may be used.

The rotating machine component 1 includes a rolling element such as a rolling bearing, a constant velocity ball joint, or the like. An operating state of such a rotating machine component 1 appears as vibration or a temperature, and thus it is possible to detect the operating state by the dedicated sensor detecting either one or both of vibration and a temperature. In particular, in the case of a rolling bearing, through detection of vibration and/or a temperature, it is possible to appropriately perform a malfunction determination, a life determination, or the like.

In a preferred embodiment, the data processing software and the specification data for the model number associated with the rotating machine component are stored in at least one of the portable information terminal and the server, and the step of performing the data processing includes performing the data processing by using the data processing software and the specification data.

In another preferred embodiment, the method further includes the steps of: storing the data processing software 4 and the specification data 5 for the model number associated with the rotating machine component in the server 6; accessing the server 6 from the portable information terminal 2, so that the data processing software 4 and the specification data 5 associated with the rotating machine component 1 to be inspected, are downloaded to the portable information terminal 2; and installing the downloaded data processing software 4 in the portable information terminal 2. The step of performing the data processing includes performing the data processing in the installed data processing software 4 of the portable information terminal 2 by using the downloaded specification data 5.

According to this configuration, the general-purpose portable information terminal 2 is used as a unit configured to perform data processing and display a result thereof, and downloads the data processing software 4 and the specification data 5 associated with the rotating machine component 1 from the server 6. Thus, by merely preparing the dedicated sensor 3 and further using the popularized portable information terminal 2 such as a smartphone, a tablet, or the like as for the rest, it is possible to easily inspect an operating state of the rotating machine component 1. For the data processing with the data processing software 4, in addition to the specification data 5 and the detection data supplied from the dedicated sensor 3, data of a rotational speed or the like of the rotating machine component 1, such as a bearing, which is inputted from the manual input unit 22 included in the portable information terminal 2 may be used.

Preferably, the specification data 5 of a rolling bearing that is the rotating machine component 1 may be in data hierarchically classified by bearing type in the server 6. The specification data 5 downloaded to the portable information terminal 2 may be stored as a file in a lowest level within a classification of a folder 26a classified hierarchically by bearing type in the portable information terminal 2.

Since the specification data 5 of the bearing is classified by bearing type and stored in the portable information terminal 2, it is possible to easily and swiftly select the required bearing specification data 5.

The hierarchical classification includes classification into ball bearing and roller bearing, classification of ball bearing into deep groove ball bearing, angular contact ball bearing, and the like, classification of roller bearing into taper roller bearing, cylindrical roller bearing, needle roller bearing, and the like, and classification by bearing size, presence/absence of a seal, a seal type, and the like. It should be noted that classification may not be made into ball bearing and roller bearing and may be made into ball bearing, taper bearing, and the like as the same level.

Preferably, the dedicated sensor 3 may have been sold with a special number allocated thereto, and the download of the data processing software 4 by the portable information terminal 2 may be permitted only when the special number is designated. In this case, the dedicated sensor 3 can be sold with a usage charge of the data processing software 4 being included in the price thereof, which is convenient for collecting and paying a fee for the data processing software 4.

Preferably, as another method for collecting the fee for the data processing software 4, the server 6 may charge for each download of the data processing software 4. As the method for charging, charging may be performed via communication with a credit card, a prepaid card, or the like, or a bill may be issued. In this case, it is possible to clearly distinguish between the payment for the data processing software 4 and the payment for the dedicated sensor 3.

Preferably, the server 6 may include a processing result storage 31 configured to store a processing result obtained from the data processing by the data processing software 4 in the portable information terminal 2. The data processing software 4 may have a comparison function to compare a plurality of the processing results and compare the plurality of the processing result by using the comparison function.

By comparing the plurality of the processing results, it is possible to perform further appropriate inspection and evaluation of an inspection result.

Preferably, the data processing software 4 may obtain numerical data as a processing result obtained by the data processing, may determine that a malfunction has occurred, if the numerical data exceeds a threshold associated with the model number or if a condition determined on the basis of comparison of time-sequential processing results is met even when the numerical data is equal to or less than the threshold, and may display a result of the determination on the screen 21 a of the portable information terminal 2.

By the portable information terminal 2 determining a malfunction on the basis of the detection data and performing display as described above, it is possible to easily recognize whether a malfunction has occurred in the rotating machine component 1. The above phrase "if a condition determined on the basis of comparison of time-sequential processing results is met even when the numerical data is equal to or less than the threshold" corresponds to, for example, the case where numerical data that is the processing results of the detection data for a plurality of times continuously exceeds a reference value that is equal to or less than the threshold, or the case where such numerical data frequently exceeds the reference value (i.e., the numerical data for a predetermined number or more of times, out of the plurality of times, exceeds the reference value). The reference value is such a value that if the numerical data that is the processing result of the detection data exceeds the reference value only once, it cannot be determined that a malfunction has occurred, but if the numerical data continuously or frequently exceeds the reference value as described above, it can be determined that a malfunction has occurred. By comparing the time-sequential processing results as described above, it is possible to further assuredly detect a malfunction.

In still another preferred embodiment, the method further includes the steps of: storing the data processing software 4 and the specification data 5 for the model number associated with the rotating machine component 1 in a portable storage device 32; connecting the portable storage device 32 to the portable information terminal 2; providing the data processing software 4 and the specification data 5 for the model number associated with the rotating machine component 1 that are stored in the portable storage device 32, to the portable information terminal 2; and installing the provided data processing software 4 in the portable information terminal 2. The step of performing the data processing includes performing the data processing in the installed data processing software 4 of the portable information terminal 2 by using the provided specification data 5.

According to this configuration, it is possible to perform installation of the data processing software 4 and provide of the specification data 5 without performing communication with the server 6. For example, the portable storage device 32 may be sold with the dedicated sensor 3 as a set.

The data processing software 4 and the specification data 5 may be stored in the portable information terminal 2 and used.

Preferably, a processing result obtained from the data processing by the data processing software 4 provided to the portable information terminal 2 may be recorded in the portable information terminal 2, and may be compared to a plurality of processing results. For example, the data processing software 4 is caused to have a function to compare the plurality of processing results.

By comparing the plurality of processing results, it is possible to perform further appropriate inspection and evaluation of an inspection result.

Preferably, the data processing software may obtain numerical data as a processing result from the data processing, may determine that a malfunction has occurred, if the numerical data exceeds a threshold associated with the model number or if a condition determined on the basis of comparison of time-sequential processing results is met even when the numerical data is equal to or less than the threshold, and may display a result of the determination on the screen of the portable information terminal.

By the portable information terminal determining a malfunction on the basis of the detection data and performing display as described above, it is possible to easily recognize whether a malfunction has occurred in the rotating machine component.

In a preferred embodiment, the method further includes the steps of: storing the data processing software 4A and the specification data 5 for the model number associated with the rotating machine component 1 in the server 6; transmitting the detection data supplied to the portable information terminal 2, from the portable information terminal 2 to the server 6; processing the detection data received from the portable information terminal 2 by the server 6, with the data processing software 4A by using the specification data 5 for the model number, and sending a result of the processing back to the portable information terminal 2; and displaying the sent-back result of the processing on the screen 21a of the portable information terminal 2.

According to this configuration, since the detection data is processed by the server 6, it is necessary to transmit the detection data from the portable terminal 2. However, the server 6 generally has a considerably higher speed processing function as compared to the portable terminal 2, thus is able to process the detection data at a high speed by using the high speed processing function, and it is possible to perform high-level processing and perform more detailed diagnosis with high accuracy.

Preferably, the result of processing obtained from the data processing by the data processing software 4A may be stored in the portable information terminal 2, and a plurality of the processing results may be compared by the portable information terminal 2.

Preferably, numerical data may be obtained as the result of processing by the data processing, it may be determined that a malfunction has occurred, if the numerical data exceeds the threshold associated with the model number or if a condition determined on the basis of comparison of time-sequential processing results is met even when the numerical data is equal to or less than the threshold, and a result of the determination may be displayed on the screen of the portable information terminal 2.

A portable-terminal-using inspection system for a rotating machine component according to a first aspect of the present invention is directed to a system of inspecting a rotating machine component 1. The system includes: a dedicated sensor 3 configured to detect a state of the rotating machine component 1; at least one general-purpose portable information terminal 2 to which detection data regarding the state detected by the dedicated sensor 3 is supplied; and a server 6 configured to be connected to the portable information terminal 2 via a communication line network 7. The server 6 includes: data processing software 4 configured to cause the portable information terminal 2 to perform data processing for inspection; and a database 15 having stored therein specification data 5 for a model number associated with the rotating machine component 1, and causes the data processing software 4 and the specification data 5 associated with the rotating machine component 1 to be inspected, to be downloaded to the portable information terminal 2 in response to access from the portable information terminal 2. The data processing software 4 is installed in the portable information terminal 2, performs data processing on the detection data that is detected by the dedicated sensor 3 and supplied to the portable information terminal 2, by using the specification data 5 downloaded to the portable information terminal 2, and displays a result of the processing on a screen 21a of the portable information terminal 2.

According to this configuration, by using the popularized portable information terminal 2 and the dedicated sensor 3 that performs an input to the portable information terminal 2 as described above, it is possible to easily inspect an operating state of the rotating machine component 1 such as a bearing or the like.

A server 6 according to one aspect of the present invention is a server 6 included in a portable-terminal-using inspection system of inspecting a rotating machine component 1. The portable-terminal-using inspection system includes: a dedicated sensor configured to detect a state of the rotating machine component; at least one general-purpose portable information terminal to which detection data regarding the state detected by the dedicated sensor is supplied; and the server 6 configured to be connected to the portable information terminal 2 via a communication line network. The server 6 includes: data processing software 4 configured to cause the portable information terminal 2 to perform data processing for inspection; and a database 15 having stored therein specification data 5 for each model number associated with the rotating machine component 1, and causes the data processing software 4 and the specification data 5 associated with the rotating machine component 1 to be inspected, to be downloaded to the portable information terminal 2 in response to access from the portable information terminal 2. The data processing software 4 is installed in the portable information terminal 2, performs data processing on the detection data that is detected by the dedicated sensor 3 and supplied to the portable information terminal 2, by using the specification data 5 downloaded to the portable information terminal 2, and displays a result of the processing on a screen 21a of the portable information terminal 2.

According to this configuration, by using the popularized portable information terminal 2 and the dedicated sensor 3 that is connected to the portable information terminal 2 or inputs detection data thereto via a storage media, it is possible to easily inspect an operating state of the rotating machine component 1 such as a bearing or the like.

A portable-terminal-using inspection system for a rotating machine component according to a second aspect of the present invention is directed to a system of inspecting a rotating machine component 1. The system includes: a dedicated sensor 3 configured to detect a state of the rotating machine component 1; at least one portable information terminal 2 to which detection data regarding the state detected by the dedicated sensor 3 is supplied; and a server 6 configured to be connected to the portable information terminal 2 via a communication line network 7. The portable information terminal 2 includes a detection data transmitter 35 configured to transmit an inputted model number associated with the rotating machine component 1 and the detection data detected by the dedicated sensor 3, to the server 6. The server 6 includes: data processing software 4A configured to perform processing on the detection data transmitted from the portable information terminal 2, by using specification data 5 for the model number associated with the rotating machine component; and a processing result sending-back unit 34 configured to send a result of the processing back to the portable information terminal 2. The portable information terminal 2 includes a processing result display unit 36 configured to display the sent-back result of the processing on a screen 21a thereof.

Also in the portable-terminal-using inspection system with this configuration, it is possible to perform the processing of the detection data at a high speed by using a high speed processing function of the server, and it is possible to perform high-level processing and perform more detailed diagnosis with high accuracy.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a diagram illustrating a portable-terminal-using inspection system for a rotating machine component according to a first embodiment of the present invention and includes a perspective view of a portable terminal and a dedicated sensor, a front view of the rotating machine component, and a block diagram of a server;
Fig. 2 is a diagram illustrating the specific operations of the inspection system in Fig. 1;
Fig. 3 is a schematic configuration diagram of the inspection system in Fig. 1;
Fig. 4 is a diagram illustrating a portable-terminal-using inspection system for a rotating machine component according to a second embodiment of the present invention and includes a perspective view of a portable terminal and a dedicated sensor, a front view of the rotating machine component, and a block diagram of a portable storage device;
Fig. 5 is a diagram illustrating a portable-terminal-using inspection system for a rotating machine component according to a third embodiment of the present invention and includes a perspective view of a portable terminal and a dedicated sensor, a front view of the rotating machine component, and a block diagram of a server; and
Fig. 6 is a schematic configuration diagram of the inspection system in Fig. 5.

### DESCRIPTION OF EMBODIMENTS

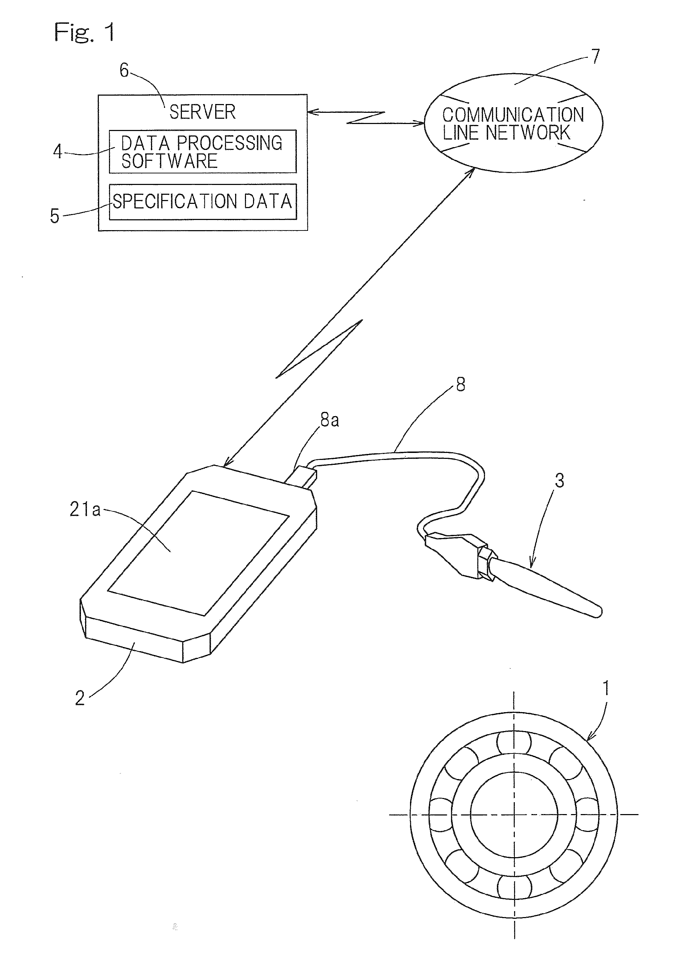

A portable-terminal-using inspection method according to a first embodiment of the present invention will be described with reference to Figs. 1 to 3. The portable-terminal-using inspection method is directed to a method for inspecting a rotating machine component 1. In the method, a general-purpose portable information terminal 2 such as a smartphone or the like and a dedicated sensor 3 connected to the portable information terminal 2 are used. Data processing software 4 and specification data (data regarding specifications) 5 associated with the rotating machine component 1, which is an inspection target, are downloaded from a server 6 to the portable information terminal 2, and detection data detected by the dedicated sensor 3 is subjected to data processing in the portable information terminal 2 and is displayed on a screen 21a of the portable information terminal 2.

The rotating machine component 1 may be a machine component including a rolling element such as a rolling bearing, a constant velocity ball joint, or the like. The portable information terminal 2 may be a smartphone, a tablet, or the like, and may not necessarily have a telephone function, but is an information processing device that is connectable to the server 6 via a wide-area communication line network 7 such as a telephone network, the Internet, or the like and has an OS (operation program) 9 that is able to download and install an application program. The smartphone may refer to a portable information terminal 2 or a mobile information terminal 2, which has a telephone function. The communication line network 7 is a line network through which mobile communication can be performed.

The dedicated sensor 3 is, for example, a pickup for detecting vibration or a sensor for detecting a temperature. In this example, the pickup for detecting vibration is used as the dedicated sensor 3. The dedicated sensor 3 is insertion-connected to the portable information terminal 2 via a cable 8 having a terminal 8a that complies with the standard of a micro USB (one of the USB standards which are connection interface standards) or the like. Alternatively, the dedicated sensor 3 may be connected to the portable information terminal 2 via a wireless LAN or the like, or may allow an attachable/detachable storage medium (not shown) such as a memory chip, a USB memory, or the like to be attached thereto and detached therefrom and may be able to supply data to the portable information terminal 2 via the storage medium.

The data processing software 4 is a program and data for causing the portable information terminal 2 to perform data processing for inspecting the rotating machine component 1, and is an application program to be executed on the OS (operation program) of the portable information terminal 2. The data processing software 4 is downloadable from the server 6 to the portable information terminal 2 via the communication line network 7 and installed in the portable information terminal 2. The data processing software 4 has, for example, a processing function to: perform frequency analysis of bearing vibration data; detect a vibration level and compare the vibration level to a threshold; determine that a malfunction has occurred, if the vibration level exceeds the threshold, and display on the screen 21a of the portable information terminal 2 that the malfunction has occurred; and determine that no malfunction has occurred, if the vibration level is less than the threshold, and display on the screen 21 a that no malfunction has occurred. In performing the malfunction determination, the data processing software 4 may determine that a malfunction has occurred, if a condition determined on the basis of comparison of time-sequential processing results is met even when the vibration level is equal to or less than the threshold, and may display the determination result on the screen 21a of the portable information terminal 2.

In the case that the rotating machine component is a rolling bearing, the specification data 5 associated with the rotating machine component 1 is, for example, the number of balls, the ball diameter, the dimensions of an inner ring and an outer ring, and the like. A model number associated with the rotating machine component 1 is a number for the rotating machine component that is determined for each specification associated with the rotating machine component 1, or a number determined for each rotating machine component. In the case that the rotating machine component 1 is a bearing, the model number may be the number referred to a bearing name or a bearing number (bearing designation), or a production number is used as the model number.

The server 6 is an information processing device configured to store the data processing software 4 and the specification data 5 for each model number associated with the rotating machine component 1 via the communication line network 7 and distribute the data processing software 4 and the specification data 5 when the portable information terminal 2 accesses the information processing device. The server 6 may be a dedicated server for use in the portable-terminal-using inspection method and system for the rotating machine component, or may be a server having a further function to distribute various application programs and data that are irrelevant to the portable-terminal-using inspection method for the rotating machine component.

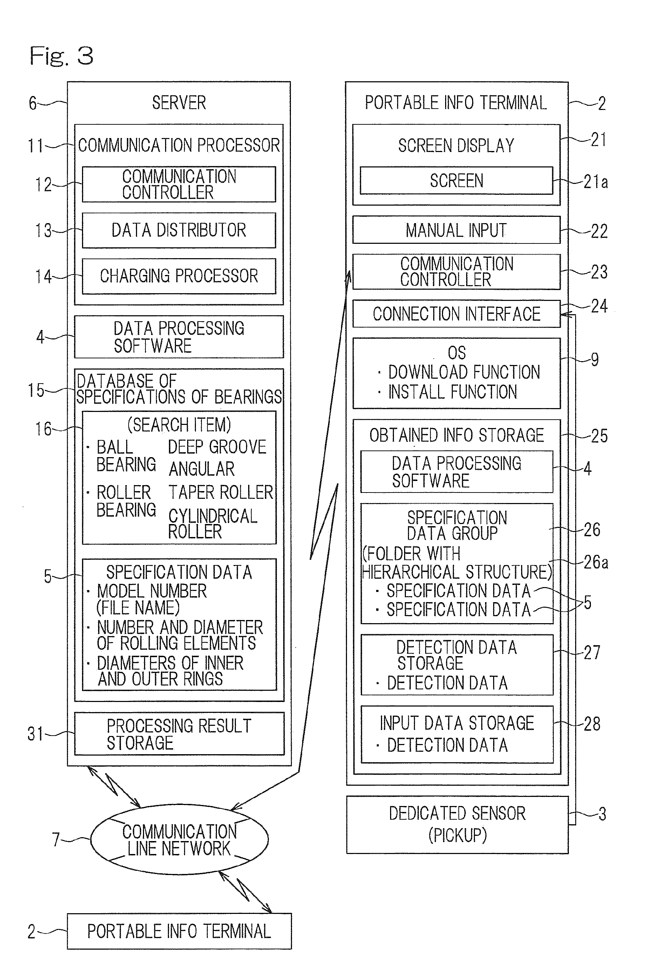

As shown in Fig. 3, the server 6 includes a communication processor 11, a storage (not shown) that has stored therein the data processing software 4, and a database 15 for the specifications of the respective rotating machines component 1 such as a bearing or the like. The communication processor 11 includes a communication controller 12, a data distributor 13, and a charging processor 14. The communication processor 11 is configured to respond to access from the portable information terminal 2 via the communication line network 7, establish communication therewith, and perform various controls regarding the communication. The data distributor 13 is configured to distribute the data processing software 4 and the specification data 5 associated with the rotating machine component 1 in response to access from the portable information terminal 2. The data distributor 13 may distribute the data processing software 4 only when a special number that is allocated (assigned) to each dedicated sensor 3 is correctly provided from the portable information terminal 2.

The database 15 includes: a database management system (not shown) that is searchable through access from the portable information terminal 2; and a data storage. In the case that the rotating machine component 1 is a bearing, the database 15 stores types of bearings hierarchically classifying the bearing as a search item 16. The search item 16 is classified into: a level classified into ball bearing and roller bearing in which ball bearing is classified into deep groove ball bearing, angular contact ball bearing, and other types of bearings, and roller bearing is classified into taper roller bearing, cylindrical roller bearing, and other types of bearings; a level classified by size; and a level classified by presence/absence of a seal and a seal type. The search item 16 may have a plurality of types of levels having different forms of classification. Specification data 5 associated with one model number in a lowest level is provided as a file. The database 15 allows a plurality of specification data 5 to be extracted as a folder with various levels. The data distributor 13 is able to distribute the plurality of specification data 5 extracted from the database 15, as the folder.

The charging processor 14 is configured to charge for each download of the data processing software 4 by the portable information terminal 2. The method for charging may be a method in which payment by a credit card or a prepaid card is requested before download of the data processing software 4, and download of the data processing software 4 is permitted when the payment is confirmed, or may be a method in which a bill is issued.

In addition to the above respective units, the server 6 may include a processing result storage 31 configured to store a processing result obtained from the portable information terminal 2 by processing with the data processing software 4. The processing result storage 31 is provided, for example, as a database, and may be configured to also store the specification data 5 processed with the data processing software 4, data obtained from the dedicated sensor 3, identification data of the portable information terminal 2, and the like. In addition, the data processing software 4 may have a function to compare a plurality of the processing results, a function to cause the processing result to be stored in the processing result storage 31 of the server 6, and a function to search the processing result storage 31 with an appropriate search condition and download the stored processing result. By the portable information terminal 2, the plurality of the processing results may be compared using the above comparison function. By comparing the plurality of the processing results, it is possible to perform further appropriate inspection and evaluation of an inspection result.

The configuration of the portable information terminal 2 will be specifically described. The portable information terminal 2 may be a smartphone, a tablet, or the like as described above, and includes the OS 9 that is able to download and install an application program, a screen display unit 21, a manual input unit 22, a communication controller 23, a connection interface 24, and an input information storage 25.

The screen display unit 21 is configured to display an image on the screen 21a, such as a liquid crystal display. The manual input unit 22 is a unit in order for an operator to manually perform an input (an interface for an input by the operator), and is composed of a hardware keyboard for inputting characters and numbers, a software keyboard that enables an input to be performed by a finger, a touch pen, or the like touching the screen 21 a, or the like. The communication controller 23 is configured to perform communication with the server 6 via the communication line network 7 and perform various processing. The connection interface 24 is an interface for connecting the portable information terminal 2 to another device. In this example, the connection interface 24 is composed of an insertion-connection terminal complying with the micro USB standard, and a circuit and software for input/output processing thereof.

The input information storage 25 is configured to store detection data of the dedicated sensor 3 inputted via the server 6, the manual input unit 22, or the connection interface 24. The data processing software 4 is provided to and installed in the input information storage 25 so as to be executable. The specification data 5 downloaded from the server 6 is stored in the input information storage 25 as a specification data group 26 including a folder with a hierarchical structure. The detection data obtained from the dedicated sensor 3 is stored in a detection data storage section 27 of the input information storage 25, and various data inputted from the manual input unit 22, such as a bearing rotational speed or the like, is stored in an input data storage section 28.

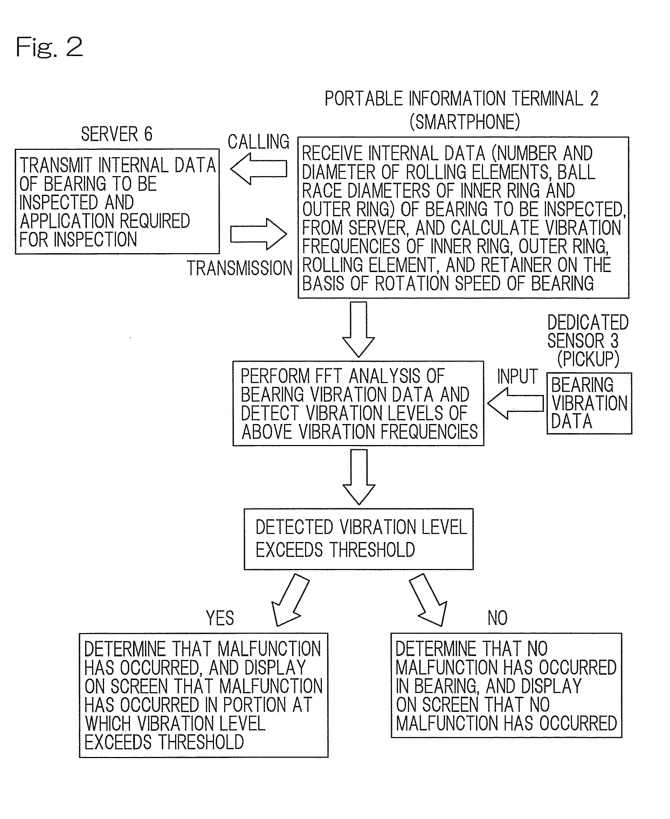

A specific example of the portable-terminal-using inspection method for the rotating machine component will be described with reference to Fig. 2. The portable information terminal 2 is a smartphone, the dedicated sensor 3 is a pickup, and the rotating machine component 1 is a bearing. First, the portable information terminal 2 accesses the server 6 and receives the specification data (also referred to as "internal data") of the bearing to be inspected and the data processing software 4 from the server 6. The server 6 transmits the specification data of the bearing to be inspected and the data processing software 4, which is an application program required for inspection, to the portable information terminal 2.

The portable information terminal 2 calculates a vibration frequency of each component (an inner ring, an outer ring, a rolling element, a retainer) of the bearing on the basis of the rotational speed of the bearing inputted from the manual input unit 22. The calculation of the vibration frequency of each component (the inner ring, the outer ring, the rolling element, the retainer) of the bearing and a display on the screen 21a for a guide to cause the rotational speed for the calculation to be inputted are performed by the data processing software 4.

Thereafter, bearing vibration data is inputted from the dedicated sensor 3 to the portable information terminal 2, and the portable information terminal 2 performs FFT analysis (frequency analysis) of the bearing vibration data by the data processing software 4 and detects a vibration level of the vibration frequency of each component of the bearing on the basis of the FFT analysis result. In other words, the portable information terminal 2 obtains numerical data of the vibration level. The portable information terminal 2 compares the detected vibration level to each threshold. If the detected vibration level exceeds the threshold, the portable information terminal 2 determines that a malfunction has occurred, and displays on the screen 21a that the malfunction has occurred in a portion (any one of the above inner ring, the above outer ring, the above rolling element, and the above retainer) at which the vibration level exceeds the threshold. If each detected vibration level does not exceed the threshold, the portable information terminal 2 determines that no malfunction has occurred in the bearing, and displays that no malfunction has occurred, on the screen 21a by using characters, a pictogram, a symbol, or the like.

By the portable information terminal 2 determining a malfunction on the basis of the detection data and performing display as described above, it is possible to easily recognize whether a malfunction has occurred in the rotating machine component 1. The above phrase "if a condition determined on the basis of comparison of time-sequential processing results is met even when the vibration level is equal to or less than the threshold" corresponds to, for example, the case where numerical data that is the processing results of the detection data for a plurality of times continuously exceeds a reference value that is equal to or less than the threshold, or the case where such numerical data frequently exceeds the reference value (i.e., the numerical data for a predetermined number or more of times, out of the plurality of times, exceeds the reference value). The reference value is such a value that if the numerical data that is the processing result of the detection data exceeds the reference value only once, it cannot be determined that a malfunction has occurred, but if the numerical data continuously or frequently exceeds the reference value as described above, it can be determined that a malfunction has occurred. By comparing the time-sequential processing results as described above, it is possible to further assuredly detect a malfunction.

According to the portable-terminal-using inspection method and system for the rotating machine component and the server, as described above, the general-purpose portable information terminal 2 is used as a unit configured to perform data processing and display a result thereof, and downloads the data processing software 4 and the specification data 5 associated with the rotating machine component 1 from the server 6. Thus, by merely preparing or providing the dedicated sensor 3 and further using the popularized portable information terminal 2 such as a smartphone, a tablet, or the like as for the rest, it is possible to easily inspect an operating state of the rotating machine component 1. In the case that the rotating machine component 1 is a rolling bearing, an operating state of the rolling bearing appears as vibration or a temperature, and thus it is possible to detect the operating state by the dedicated sensor 3 detecting vibration. In particular, in the case of a rolling bearing, through detection of vibration, it is possible to detect data based on which a malfunction determination, a life determination, or the like can be appropriately performed.

The specification data 5 for only one type of the rolling bearing may be stored, but the specification data 5 downloaded to the portable information terminal 2 may be stored as a file in a lowest level within a folder 26a classified hierarchically by bearing type in the portable information terminal 2. In this case, it is not necessary to download the specification data 5 each time a bearing to be inspected is changed, and it is possible to easily and swiftly select the required bearing specification data 5.

Regarding application of the portable-terminal-using inspection method for the rotating machine component, the dedicated sensor 3 may be sold with a special number allocated thereto, and download of the data processing software 4 by the portable information terminal 2 may be allowed by using the special number.

In this case, the dedicated sensor 3 can be sold with a usage charge of the data processing software 4 being included in the price thereof, which is convenient for collecting and paying a fee for the data processing software 4.

In addition, as another method for collecting the fee for the data processing software 4, the server 6 may charge for each download of the data processing software 4. As the method for charging, as described above, charging may be performed via communication with a credit card, a prepaid card, or the like, or a bill may be issued. In this case, it is possible to clearly distinguish between the payment for the data processing software 4 and the payment for the dedicated sensor 3.

In the embodiment described above, the dedicated sensor 3 detects vibration, but may detect a temperature, may detect both vibration and a temperature, or may detect another condition. Where detection is performed by the data processing software 4 using both vibration and a temperature, it is possible to accurately perform a malfunction determination. In addition, in the embodiment described above, the case where the rotating machine component 1 is a rolling bearing has been described, but the present invention is applicable to inspection of various rotating machine components 1 other than a bearing, such as a constant velocity ball joint and the like.

Communication between the portable information terminal 2 and the server 6 may be performed from the portable information terminal 2 directly via the communication line network 7 such as an off-premise telephone network or the like. Alternatively, the portable information terminal 2 may connect to the server 6 from the off-premise communication line network 7 via a premise LAN or the like.

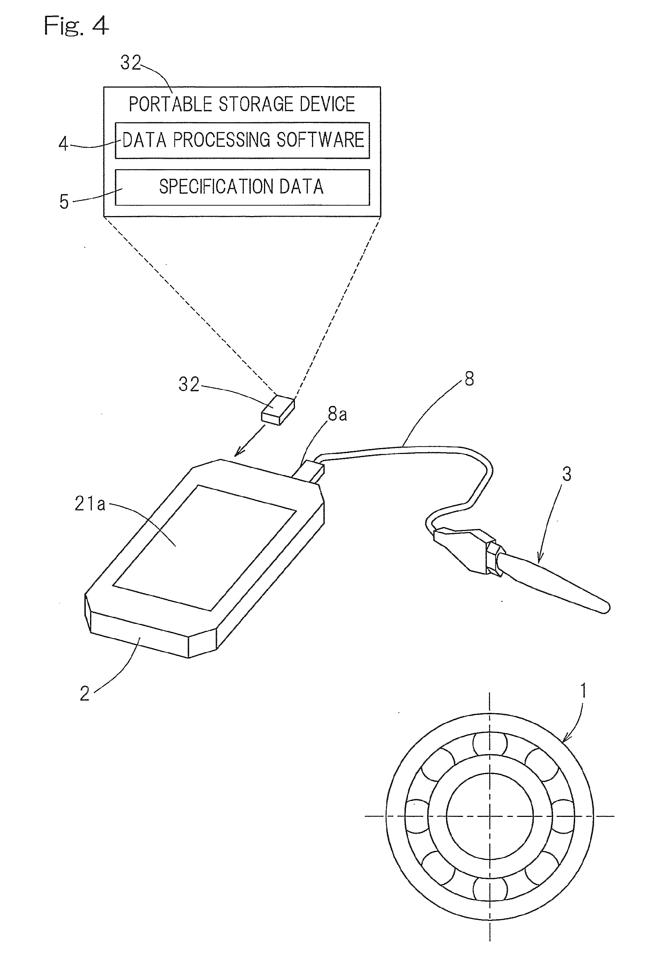

Fig. 4 shows a system for a portable-terminal-using inspection method according to a second embodiment of the present invention. The second embodiment is the same as the first embodiment, except for matter described in particular. In this embodiment, a server is not used. Instead, the data processing software 4, which causes data processing for inspection to be performed, and the specification data 5 for model numbers associated with the rotating machine components are provided to the portable information terminal 2 from a portable storage device 32 that has stored therein the data processing software 4 and the specification data 5, and the provided data processing software 4 is installed in the portable information terminal 2. Thereafter, similarly to the first embodiment, the detection data that is detected by the dedicated sensor 3 and supplied to the portable information terminal 2 is subjected to data processing using the inputted specification data 5 by the data processing software 4 installed in the portable information terminal 2, and the processing result is displayed on the screen 21a of the portable information terminal 2.

The portable storage device 32 may be a card type memory chip such as a micro SD card or the like, a USB memory, or the like. The portable information terminal 2 generally has a connector (not shown) such as a terminal having an interface for the card type memory chip or the USB memory, a card accommodation portion, or the like. The connector is used by the portable information terminal 2.

In the case of the embodiment, it is possible to perform installation of the data processing software 4 and input of the specification data 5 without performing communication with a server. For example, the portable storage device 32 may be sold with the dedicated sensor 3 as a set. In this case, the data processing software 4 and the specification data 5 are associated with the special sensor 3 through a number such as a serial number or the like and can be associated with the special sensor 3 on a one-to-one basis.

The data processing software 4 and the specification data 5 may be stored in the portable information terminal 2 and used.

In addition, the processing result obtained by data processing with the data processing software 4 by the portable information terminal 2 may be recorded in the portable information terminal 2 and compared to a plurality of processing results. For example, the data processing software 4 is caused to have a function of comparing a plurality of processing results.

By comparing a plurality of processing results, it is possible to perform further appropriate inspection and evaluation of an inspection result.

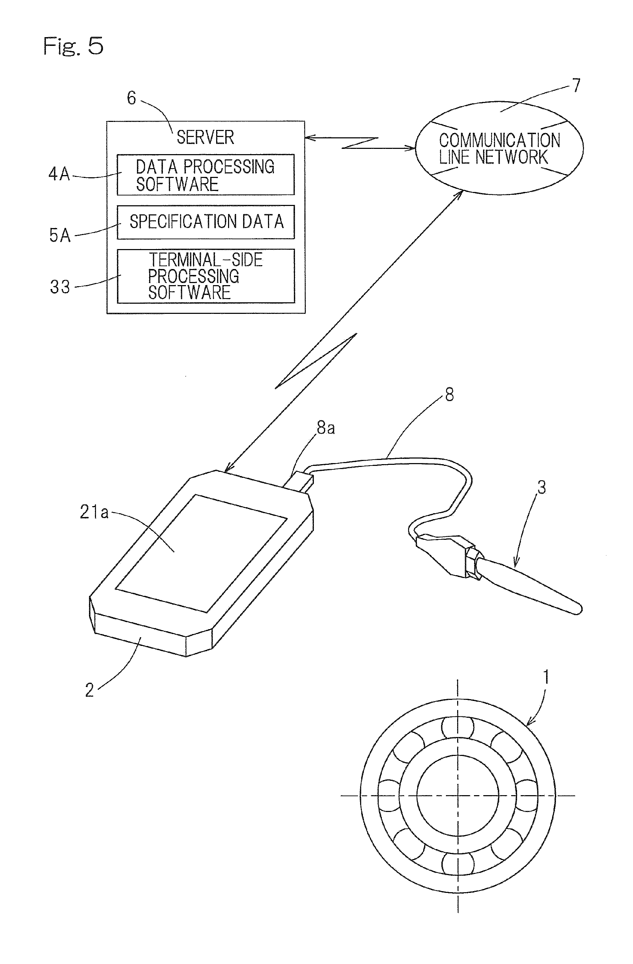

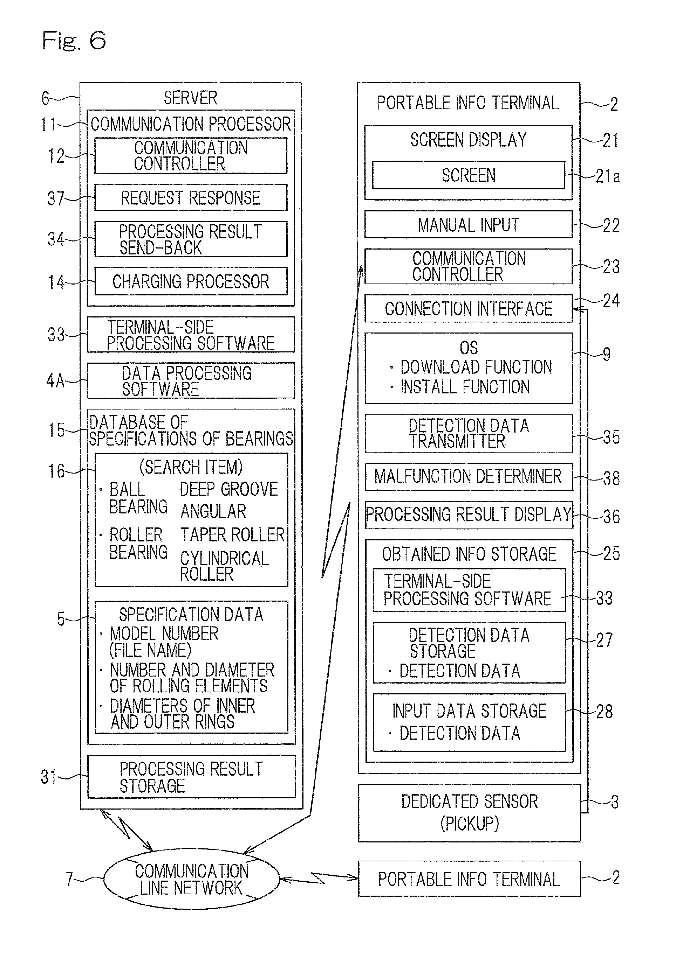

Figs. 5 and 6 show a system for a portable-terminal-using inspection method according to a third embodiment of the present invention. In this embodiment, detection data is processed by the server 6, and in this connection, other matter is also partially different from the first and second embodiments. It should be noted that this embodiment is the same as the first and/or second embodiment, except for matter described in particular, and an overlap description is omitted.

The configuration of the inspection system according to this embodiment will be described. In this embodiment, data processing software 4A and the bearing specification database 15 stored in the server 6 are not for transmission to the portable information terminal 2 but for processing in the server 6. The server 6 includes, as part of the communication processor 11 or independently of the communication processor 11, a request response unit 37 that is configured to respond to a request from the portable information terminal 2. The request response unit 37 causes data processing with the data processing software 4A to be performed in response to a request for data processing from the portable information terminal 2. The processing result is sent back to the portable information terminal 2 by a processing result sending-back unit 34. In addition, the server 6 has stored therein terminal-side processing software 33 as software to be transmitted to the portable information terminal 2, and transmits the terminal-side processing software 33 to the portable information terminal 2 by the request response unit 37 in response to a transmission request from the portable information terminal 2. It should be noted that the data processing software 4A to be executed by the server 6 is also configured to perform, for example, FFT analysis (frequency analysis) and detect a vibration level of a vibration frequency of each component of the bearing on the basis of the FFT analysis result. Alternative to via communication, the terminal-side processing software 33 may be loaded from the portable storage device 32 (Fig. 4) to the portable information terminal 2 similarly to the method according to the second embodiment.

The terminal-side processing software 33 is software for: processing of transmitting the detection data that is detected by the dedicated sensor 3 and supplied to the portable information terminal 2, to the server 6 and causing the server 6 to perform data processing; and the like. The terminal-side processing software 33 is installed in the portable information terminal 2, that is, is made executable in the portable information terminal 2, thereby constituting a detection data transmitter 35, a processing result display unit 36, and a malfunction determiner 38 in the portable information terminal 2.

The inspection method using the inspection system of this embodiment will be described. First, as a preparing process, the portable information terminal 2 requests the server 6 to transmit the terminal-side processing software 33 thereto. In response to the transmission request, the server 6 transmits the terminal-side processing software 33 to the portable information terminal 2. The portable information terminal 2 installs the downloaded terminal-side processing software 33 to make the terminal-side processing software 33 executable.

In inspection, detection data inputted from the dedicated sensor 3 to the portable information terminal 2, the model number associated with the rotating machine component 1 inputted from the manual input unit 22 or the like, and data of a rotational frequency or the number of revolution (= rotational speed) at inspection in the rotating machine component 1 which is obtained by the dedicated sensor 3 are transmitted from the portable information terminal 2 to the server 6. The data of the rotational frequency may be inputted from the manual input unit 22, or may be data obtained from a rotation detector (not shown).

The server 6 processes the received detection data with the data processing software 4A using the specification data 5 associated with the model number and the rotational frequency, and sends the processing result back to the portable information terminal 2 by the processing result sending-back unit 34. The portable information terminal 2 displays the sent-back processing result on the screen 21 a.

In the case of the method according to this embodiment, since the detection data is processed by the server 6, it is necessary to transmit the detection data from the portable information terminal 2 thereto. However, the server 6 generally has a considerably higher speed processing function as compared to the portable information terminal 2, thus is able to process the detection data at a high speed by using the high speed processing function, and it is possible to perform high-level processing and perform more detailed diagnosis with high accuracy. The other advantageous effects are the same as those of the portable-terminal-using inspection method according to the second embodiment.

Also in the case of the method in which data processing is performed by the server 6, a processing result obtained by data processing with the data processing software 4A may be stored in the portable information terminal 2, and a plurality of processing results may be compared. The comparison of the processing results is performed by the terminal-side processing software 33, namely, by the malfunction determiner 38.

In addition, also in the case of the method in which data processing is performed by the server 6, numerical data may be obtained as a processing result obtained by the data processing; if the numerical data exceeds a threshold determined for each model number, or if a condition determined on the basis of comparison of time-sequential processing results is met even when the numerical data is equal to or less than the threshold, it may be determined that a malfunction has occurred, and the determination result may be displayed on the screen of the portable information terminal 2 by the processing result display unit 36 or the like.

Although the preferred embodiments have been described above with reference to the drawings, those skilled in the art will readily conceive various changes and modifications within the framework of obviousness upon the reading of the specification herein presented of the present invention. Accordingly, such changes and modifications are to be construed as included in the scope of the present invention as delivered from the claims annexed hereto.

### [Reference Numerals]

- 1:: rotating machine component
- 2:: portable information terminal
- 3:: dedicated sensor
- 4, 4A:: data processing software
- 5:: specification data
- 6:: server
- 7:: communication line network
- 21a:: screen

## Claims

1. An inspection method for inspecting a rotating machine component by using a general-purpose portable information terminal, the method comprising the steps of:
detecting a state of the rotating machine component by a dedicated sensor;
supplying detection data regarding the detected state from the dedicated sensor to the portable information terminal;
in the portable information terminal or in a server connected to the portable information terminal via a communication network, performing data processing on the detection data by using data processing software and specification data for a model number associated with the rotating machine component; and
displaying a result of the data processing on a screen of the portable information terminal.

2. The inspection method as claimed in claim 1, wherein the data processing software and the specification data for the model number associated with the rotating machine component are stored in at least one of the portable information terminal and the server, and the step of performing the data processing includes performing the data processing by using the data processing software and the specification data.

3. The inspection method as claimed in claim 1, further comprising the steps of:
storing the data processing software and the specification data for the model number associated with the rotating machine component in the server;
accessing the server from the portable information terminal, so that the data processing software and the specification data associated with the rotating machine component to be inspected, are downloaded to the portable information terminal; and
installing the downloaded data processing software in the portable information terminal, wherein
the step of performing the data processing includes performing the data processing in the installed data processing software of the portable information terminal by using the downloaded specification data.

4. The inspection method as claimed in claim 3, wherein the rotating machine component is a rolling bearing.

5. The inspection method as claimed in claim 4, wherein the specification data for the rolling bearing which is the rotating machine component is in data hierarchically classified by bearing type in the server, and the specification data downloaded to the portable information terminal is stored as a file in a lowest level within a classification of a folder classified hierarchically by bearing type in the portable information terminal.

6. The inspection method as claimed in claim 3, wherein the dedicated sensor has been sold with a special number allocated thereto, and the download of the data processing software by the portable information terminal is permitted only when the special number is designated.

7. The inspection method as claimed in claim 3, wherein the server charges for each download of the data processing software.

8. The inspection method as claimed in claim 3, wherein the server includes a processing result storage configured to store a processing result obtained from the data processing by the data processing software in the portable information terminal, and the data processing software has a comparison function to compare a plurality of the processing results and compares the plurality of the processing result by using the comparison function.

9. The inspection method as claimed in claim 3, wherein the data processing software obtains numerical data as a processing result obtained from the data processing, determines that a malfunction has occurred, if the numerical data exceeds a threshold associated with the model number or if a condition determined on the basis of comparison of time-sequential processing results is met even when the numerical data is equal to or less than the threshold, and displays a result of the determination on the screen of the portable information terminal.

10. The inspection method as claimed in claim 1, further comprising the steps of:
storing the data processing software and the specification data for the model number associated with the rotating machine component in a portable storage device;
connecting the portable storage device to the portable information terminal;
providing the data processing software and the specification data for the model number associated with the rotating machine component that are stored in the portable storage device, to the portable information terminal; and
installing the provided data processing software in the portable information terminal, wherein
the step of performing the data processing includes performing the data processing in the installed data processing software of the portable information terminal by using the provided specification data.

11. The inspection method as claimed in claim 10, wherein a processing result obtained from the data processing by the data processing software is stored in the portable information terminal, and a plurality of the processing results are compared.

12. The inspection method as claimed in claim 10, wherein numerical data is obtained as a processing result from the data processing, it is determined that a malfunction has occurred, if the numerical data exceeds a threshold associated with the model number or if a condition determined on the basis of comparison of time-sequential processing results is met even when the numerical data is equal to or less than the threshold, and a result of the determination is displayed on the screen of the portable information terminal.

13. The inspection method as claimed in claim 1, further comprising the steps of:
storing the data processing software and the specification data for the model number associated with the rotating machine component in the server;
transmitting the detection data supplied to the portable information terminal, from the portable information terminal to the server;
processing the detection data received from the portable information terminal by the server, with the data processing software by using the specification data for the model number, and sending a result of the processing back to the portable information terminal; and
displaying the sent-back result of the processing on the screen of the portable information terminal.

14. The inspection method as claimed in claim 13, further comprising the steps of:
storing the result of the processing obtained from the data processing by the data processing software, in the portable information terminal; and
comparing a plurality of the processing results by the portable information terminal.

15. The inspection method as claimed in claim 13, further comprising the steps of:
obtaining numerical data as the result of the processing by the data processing;
determining that a malfunction has occurred, if the numerical data exceeds a threshold associated with the model number or if a condition determined on the basis of comparison of time-sequential processing results is met even when the numerical data is equal to or less than the threshold; and
displaying a result of the determination on the screen of the portable information terminal.

16. A portable-terminal-using inspection system of inspecting a rotating machine component, the system comprising:
a dedicated sensor configured to detect a state of the rotating machine component;
at least one general-purpose portable information terminal to which detection data regarding the state detected by the dedicated sensor is supplied; and
a server configured to be connected to the portable information terminal via a communication line network, wherein
the server includes: data processing software configured to cause the portable information terminal to perform data processing for inspection; and a database having stored therein specification data for a model number associated with the rotating machine component, and causes the data processing software and the specification data associated with the rotating machine component to be inspected, to be downloaded to the portable information terminal in response to access from the portable information terminal, and
the data processing software is installed in the portable information terminal, performs data processing on the detection data that is detected by the dedicated sensor and supplied to the portable information terminal, by using the specification data downloaded to the portable information terminal, and displays a result of the processing on a screen of the portable information terminal.

17. A server included in a portable-terminal-using inspection system of inspecting a rotating machine component, wherein
the portable-terminal-using inspection system includes:
a dedicated sensor configured to detect a state of the rotating machine component;
at least one general-purpose portable information terminal to which detection data regarding the state detected by the dedicated sensor is supplied; and
the server configured to be connected to the portable information terminal via a communication line network,
the server includes: data processing software configured to cause the portable information terminal to perform data processing for inspection; and a database having stored therein specification data for each model number associated with the rotating machine component, and causes the data processing software and the specification data associated with the rotating machine component to be inspected, to be downloaded to the portable information terminal in response to access from the portable information terminal, and
the data processing software is installed in the portable information terminal, performs data processing on the detection data that is detected by the dedicated sensor and supplied to the portable information terminal, by using the specification data downloaded to the portable information terminal, and displays a result of the processing on a screen of the portable information terminal.

18. A portable-terminal-using inspection system of inspecting a rotating machine component, the system comprising:
a dedicated sensor configured to detect a state of the rotating machine component;
at least one portable information terminal to which detection data regarding the state detected by the dedicated sensor is supplied; and
a server configured to be connected to the portable information terminal via a communication line network, wherein
the portable information terminal includes a detection data transmitter configured to transmit an inputted model number associated with the rotating machine component and the detection data detected by the dedicated sensor, to the server,
the server includes: data processing software configured to perform processing on the detection data transmitted from the portable information terminal, by using specification data for the model number associated with the rotating machine component; and a processing result sending-back unit configured to send a result of the processing back to the portable information terminal, and
the portable information terminal includes a processing result display unit configured to display the sent-back result of the processing on a screen thereof.
